# EUROPEAN PATENT SPECIFICATION

(11) **EP 4 023 500 B1**
(45) Date of publication and mention of the grant of the patent: **22.11.2023**
(21) Application number: 20217581.6
(22) Date of filing: 29.12.2020
(51) Int. Cl.: B60R 11/02, H04B 1/3877, H04M 1/04, B60R 11/00

(54) **HOLDING DEVICE FOR A MOBILE RADIO**
HALTEVORRICHTUNG FÜR EIN MOBILES FUNKGERÄT
DISPOSITIF DE SUPPORT POUR RADIO MOBILE

(43) Date of publication of application: 06.07.2022
(73) Proprietor: Rohde & Schwarz GmbH & Co. KG, 81671 München (DE)
(72) Inventor: ESCHERICH, Andreas, 94469 Deggendorf (DE); LUDAESCHER, Udo, 71546 Aspach (DE); WENZEL, Dietmar, 81549 München (DE); BRAUN, Johannes, 94357 Konzell (DE); AUGUSTIN, Andreas, 94234 Viechtach (DE)
(74) Representative: Isarpatent

(56) References cited:
- DE-A1-102009 039 593
- DE-A1-102015 009 993
- DE-B3-102005 025 530
- DE-U1- 9 213 950
- JP-A- 2020 147 260
- US-A- 6 019 624

## Description

### Technical field

The present invention relates to a holding device for a mobile radio. In particular, the present invention relates to a device for securely holding a mobile radio under difficult conditions.

### Background

Even though applicable in general to any mobile electronic device, in particular to any kind of mobile communication device, the present invention and its underlying problem will be hereinafter described in connection with a tactical radio. DE 10 2015 009993 A1 discloses a holding device 10 suitable for a mobile radio, comprising: a baseplate 14; a clamping fixture comprising a first jaw 32 which is firmly mounted on the baseplate 14 and a second jaw 16 attached to the baseplate 14 and moveable in a direction towards the first jaw 32 such that the mobile radio is clamped by the two jaws 16, 32 between its left side and its right side; a lever 17, coupled to the second jaw 16 and configured to move the second jaw 16 towards the first jaw 32, wherein the second jaw 16 comprises an opening configured to permit access to an operating element at the respective side of the mobile radio through the opening.

Tactical radios usually are operated under rough conditions. For example, the radios may be moved around in trucks or off-road vehicles. For this purpose, the radios may be mounted in a holding device while the vehicle is moving. In order to keep the radio safe even when the vehicle is driving under off-road conditions, a reliable fixture for the radio is required. For example, the radio may be put into a cup-shaped holder or the like.

Due to the high requirements regarding the secure fixture of the mobile radio, operating the radio may become difficult. In particular, it may be not possible to reach all operating elements of the radio as long as the radio is in the fixture. Accordingly, operating the radio in the fixture may be limited.

Against this problem, a problem addressed by the present invention is to provide a secure holding device for a mobile radio which allows versatile operation of the mobile radio when the radio is held by the holding device. In particular, the present invention aims to provide a secure fixture of the mobile radio in the holding device such that the radio is even secured under difficult conditions e.g. driving in an off-road environment. Further, the present invention aims to provide a holding device which allows almost full access to the operating elements of the mobile radio, especially access to a battery of the mobile radio.

### Summary

The present invention provides a holding device for a mobile radio with the features of independent claim 1. Further advantageous embodiments are subject matter of the dependent claims.

Accordingly, a holding device for a mobile radio is provided, which comprises a baseplate, a clamping fixture and a lever. The clamping fixture comprises a first jaw and a second jaw. The first jaw is firmly mounted on the baseplate. The second jaw is attached to the baseplate. Further, the second jaw is moveable in a direction towards the first jaw. In particular, the second jaw may move in a direction parallel to a surface of the baseplate. The lever is coupled to the second jaw. Further, the lever is configured to move the second jaw towards the first jaw.

The present invention is based on the finding that a fixture for a mobile device such as a mobile radio requires a secure holding mechanism in order to firmly hold the device even under rough conditions. However, such a secure fixture usually covers large parts of the device. Accordingly, access to the operating elements of the mobile device, and particularly, access to a battery of the mobile device is limited. Thus, some functionalities of the mobile device may be not available as long as the device is held by the holding device. In particular, if access to the battery of the mobile device is not possible, the device may switch off when the battery is empty or weak.

The present invention takes into account this finding and aims to provide a secure and versatile holding device for a mobile device such as a mobile radio, which provides a secure fixture of the mobile device, wherein at the same time the mobile device can be fully operated. Furthermore, the present invention aims to provide a holding device for a mobile radio which allows access to a battery, especially in order to remove or replace the battery while the device is held by the holding device.

The present invention provides a holding device for a mobile radio, wherein the mobile radio is held by two jaws. The two jaws may clamp the mobile radio between the left and the right side of the mobile radio. Accordingly, the front of the mobile radio as well as the top and the lower part of the mobile radio may be still fully accessible. In this way, all operating elements and connectors at the respective sides of the mobile radio are available.

For example, a power connector of the mobile radio may be accessible, and accordingly, an external power supply may be connected to the mobile radio when the mobile radio is held by the holding device. In this way, it may be possible to power the mobile radio by an external power supply, and the mobile radio may be even charged in this position. Further connectors such as a connector for an external antenna, external headphones or microphones or the like may be also accessible. In particular, the provided holding device makes it even possible to insert the mobile radio into the holding device or remove the mobile radio from the holding device while some further elements are still connected to the mobile radio.

Furthermore, since the holding device may still provide full access to a battery connected to the mobile radio, it may be possible to remove the battery from the mobile radio or replace the battery by another battery during the mobile radio is held by the holding device. Especially, if the mobile radio is provided with power from an external power supply during the replacement of a battery, the mobile radio may be operated all over the time without shutting down the radio.

The baseplate of the holding device may be any kind of appropriate plate. For example, the baseplate may be a plate with one or more holes. Accordingly, the baseplate may be mounted anywhere by screwing the baseplate to an appropriate basis. In this way, the holding device may be firmly, and if necessary, permanently, mounted. For example, the baseplate and the holding device may be mounted on a basis of a vehicle cabin or the like. However, it is understood that any other configuration or scheme for mounting the baseplate may be also possible.

In order to clamp the mobile radio, a clamping fixture is used which clamps the mobile radio between two jaws. Accordingly, the mobile radio is held by the two jaws of the clamping fixture which clamp the mobile radio between the left side and the right side of the mobile radio. For this purpose, the sides of the jaws facing towards the mobile radio may be provided with a non-slipping material, for example rubber or the like. However, any further measure for securely holding the mobile radio between the two jaws may be also possible. For example, specific structures may be provided on the jaws which correspond to respective structures on the mobile radio. This will be described in more detail below.

In order to clamp the mobile radio between the two jaws of the clamping fixture, at least one of the two jaws is a moveable jaw. The other jaw is a fixed jaw. Accordingly, by moving the moveable jaw towards the side of the mobile radio, an appropriate force may be applied such that the mobile radio is firmly held by the clamping fixture of the holding device. For example, a spring or the like may be used in order to apply the desired force towards the mobile radio.

The moveable jaw moves in a direction towards/from the respective side of the mobile radio. Accordingly, the moveable jaw moves towards/from the corresponding fixed jaw. Especially, the moveable jaw may move in a direction which is parallel to a surface of the baseplate.

The movement of the moveable jaw is controlled by a lever. For this purpose, an appropriate mechanism may be provided which moves the moveable jaw and applies an appropriate force towards the mobile radio based on the movement/position of the lever. For this purpose, the lever is coupled in appropriate manner with the moveable jaw. It is understood, that any appropriate component such as a joint, a gear, a clutch or the like may be used in order to forward the movement and a force from the lever towards the clamping fixture, in particular towards the moveable jaw. In particular, a spring or the like may be used, and the spring may be tightened by moving the lever accordingly. The movement of the second jaw in the direction of the mobile phone may be, for example, a swivel movement of a lateral movement to a sidewall of the mobile phone.

The lever may be coupled to the moveable jaw by a joint or the like. Accordingly, the direction of movement of the lever may be different from the direction of movement of the moveable jaw. In this way, the task of clamping the mobile radio by moving the lever can be improved. In particular, the size of the lever and the direction of movement may be provided in such a manner that putting the mobile radio into the holding device and tightening the jaw can be performed by a single hand, even with a glove or the like.

Further embodiments of the present invention are subject of further subclaims and of the following description referring to the drawings.

According to the invention, the first jaw comprises a connection element. The connection element is configured to electrically couple a communication interface of the mobile radio with an external communication device.

The external communication device may be any kind of appropriate communication device. For example, the external communication device may be a communication system such as an intercom system of a vehicle cabin or the like. Accordingly, communication signals may be forwarded between the external communication device and the handheld radio. The communication interface may be any kind of appropriate communication interface, for example a communication interface for forwarding speech signals or the like. However, it may be also possible to exchange data signals or any other kind of appropriate signal.

According to the invention, the connection element for connecting the communication interface of the mobile radio with an external communication device is integrated in the first jaw, i.e. the fixed jaw.

Accordingly, by clamping the mobile radio between the moveable second jaw and the fixed first jaw, an appropriate force is applied to the mobile radio such that the electrical contacts of the communication interface of the mobile radio are pressed towards the electrical contacts of the connection element integrated in the first jaw.

According to the invention, the first jaw and/or the second jaw comprise at least one holding element. Each holding element may fit into a corresponding opening on a side of the mobile radio.

For example, the holding elements may comprise one or more pins or the like. The pins may protrude into corresponding openings of the mobile radio, in particular openings at the respective sides of the mobile radio. However, any other kind of structure with corresponding structures on the sides of the mobile radio may be possible, too. In this way, the reliability of clamping the mobile radio may be further improved. Especially, the holding elements may securely fasten the mobile radio even without applying a force to the mobile radio by the first and/or second jaw. For example, the movement of the second jaw in the direction to the mobile phone may be limited by a sidewall of the baseplate. In this way, deformation or damage of the mobile radio, in particular the sidewalls of the mobile radio, can be prevented.

In a possible embodiment, the holding device may be configured to hold the mobile radio by the one or more pins without applying a force, especially a force in the direction of the mobile radio by a first and/or a second jaw. For example, the holding device may comprise a limiting element. The limiting element may limit the movement of the second jaw in the direction of the mobile radio. Accordingly, the movement and/or the force of first and/or second jaw in the direction of the side walls of the radio can be limited.

Additionally, non-slipping material may be applied to the respective sides of the jaws and/or the sides of the mobile radio. In this way, the holding strength can be further improved.

In a possible embodiment, the baseplate may comprise a ventilation structure. The ventilation structure may be configured to provide an air circulation between the baseplate and the mobile radio, when the mobile radio is inserted into the holding device.

For example, the baseplate may comprise one or more elements for keeping a distance between the baseplate and the mobile radio. For example, spacer elements such as pins or the like may be used for this purpose. In particular, the spacer elements may be arranged in such a manner that an appropriate air circulation can be achieved between the baseplate and the mobile radio. In this way, the air circulation may be used in order to cool the mobile radio. However, it is understood that any other configuration for dissipating heat from the mobile radio, in particular by passive cooling elements or the like may be possible, too.

In a possible embodiment, the holding device may comprise an active cooling device. The active cooling device may be configured to dissipate heat from the mobile radio when the mobile radio is inserted into the mounting device.

The active cooling device may be, for example, a fan or the like. However, any other cooling device such as a Peltier element may be also possible in order to cool the mobile radio during operation. For example, the cooling device may cool the baseplate or the side of the mobile radio facing towards the baseplate.

In a possible embodiment, the holding device comprises a power connector and/or data connector. The power connector may be configured to connect the mobile radio to an external power supply. The data connector may be configured to establish a data connection with an external device.

The power connector may be, for example, a separate connector which is provided by the holding device in order to connect the mobile radio to an external power supply. However, it may be also possible that the power connector and/or data connector is integrated in the holding device, for example in the baseplate or a jaw, in particular the fixed first jaw. In this way, the mobile radio may be provided with power from the external power supply. Accordingly, the internal battery of the mobile radio is not discharged as long as the mobile radio is inserted into the holding device.

The external power supply may be any kind of appropriate power supply. For example, the external power supply may be a connection to an external battery or a power supply arrangement of a vehicle or the like.

In a possible embodiment, the holding device may comprise a power supply. The power supply may be configured to provide power to the mobile radio. Additionally or alternatively, the power supply may be configured to charge a battery of the mobile radio.

The power supply of the holding device may be any kind of appropriate power supply. For example, the power supply may comprise a power converter which converts an external power to the requirements of the mobile radio. For example, the power supply may comprise a voltage converter, a rectifier or an inverter. Furthermore, the power supply may comprise, for example, a transformer or the like in order to provide a galvanic insulation between the mobile radio and an external power source. The power supply of the holding device may be connected, for example with a power supply of a vehicle, an external generator or the like.

By providing power to the mobile radio, the mobile radio may be operated even if the internal battery of the mobile radio is discharged or removed. Accordingly, the mobile radio will not shut down in such a case when the battery is discharged or removed. Furthermore, by charging the battery of the mobile radio, while the mobile radio is inserted into the holding device, the mobile radio, in particular the battery of the mobile radio may be prepared for a further mobile operation after removing the mobile radio from the holding device.

In a possible embodiment, the first jaw and the second jaw are configured to clamp only the sides of the mobile radio without locking the battery of the mobile radio.

For example, the first and second jaw may clamp only a part of the sides of the mobile radio such that the battery of the mobile radio is not touched by the jaws, and the jaws do not hamper removing the battery. Accordingly, the battery of the mobile radio may be removed and/or another battery may be inserted into the mobile radio, while the mobile radio is held by the holding device. In this way, the battery of the mobile radio may be replaced by another, charged battery, in order to prepare the mobile radio for a further mobile operation.

In a possible embodiment, the baseplate of the holding device may be configured to allow free access to the battery of the mobile radio.

For example, the size of the baseplate may be limited, especially in such a manner that the baseplate does not extend towards a direction which would hamper or disable removing the battery and/or inserting another battery into the mobile radio.

In a possible embodiment, the second jaw of the clamping fixture may be configured to apply a predetermined force in the direction of the mobile radio.

For example, the predetermined force may be a force of a predetermined range, for example about 250 Newton (N) or a range between 100 N and 500 N. However, any other appropriate range in order to apply a sufficient force for clamping the mobile radio without damaging the mobile radio may be possible. The appropriate force may be applied, for example, by tightening a spring or the like.

In a possible embodiment, the clamping fixture may be configured to limit the maximum force which are applied by the second jaw to the mobile radio. For example, the clamping fixture may comprise a spring or the like. For instance, the maximum force which is applied to the mobile radio may be limited to 100 N, 250 N or 500 N. However, any other appropriate value for a maximum force may be also possible. Especially, the maximum force may be set depending on the properties of the housing of the mobile radio. For this purpose, the clamping fixture may comprise a configuration means for adapting the maximum force which is applied by the second jaw to the mobile radio. Accordingly, the maximum of force may be set, for example, depending on the properties of the housing of the mobile radio.

In a possible embodiment, the first jaw may cover the respective sides of the mobile radio only partially, when the mobile radio is inserted into the holding device.

By covering only a part of the respective side of the mobile radio, operational buttons on the sides of the mobile radio can be reached by a user. Accordingly, the respective functionalities can be still performed even if the mobile radio is held by the holding device.

According to the invention, the second jaw comprises an opening. The opening may be configured to permit access to an operating element at the respective side of the mobile radio through the opening.

The operating element may be, for example, a button or knob or the like. Furthermore, the operating element may be also a terminal, plug or connector for connecting an antenna, a power supply or a data communication.

In a possible embodiment, the holding device may comprise a locking means. The locking means may be configured to lock the lever. Accordingly, by locking the lever the second jaw is also locked in a predetermined position.

For example, the locking means may automatically lock the lever and/or the second jaw upon the mobile phone is clamped between the first jaw and the second jaw. Thus, in order to remove the mobile radio from the holding device, the lever has to be released, for example by a release button or by moving the lever in an appropriate manner.

In a possible embodiment, the holding device may comprise a guide element. The guide element may be arranged at a fixed position on the baseplate, or the guide element may be even part of the baseplate. The guide element may be configured to guide the mobile radio to a predetermined position, when the radio is inserted into the holding device.

For example, the guide element may be a pin or any other element such as a stop element or the like. Accordingly, the mobile radio may be moved in the direction of the guide element, and the guide element may stop further movement such that the mobile radio is in a correct position.

With the present invention it is therefore possible to provide a secure and versatile holding device for a mobile device such as a mobile radio, in particular a software defined mobile radio. By clamping the mobile radio between two jaws, a secure fixture of the mobile radio can be achieved. At the same time, operating elements and even the battery of the mobile radio may be still accessible. Accordingly, it is possible to fully operate the mobile radio while the mobile radio is held by the holding device. In addition, external power may be provided to the mobile radio while the mobile radio is held by the holding device. Thus, the internal battery of the mobile radio will be not further discharged, and can be even charged while the mobile radio is held by the holding device. Furthermore, by providing external power to the mobile radio, the internal battery of the mobile radio may be replaced by another battery without shutting down the mobile radio.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures and drawings, in which:
- Fig. 1:: a schematic illustration of a holding device according to an embodiment in perspective view;
- Fig. 2:: a schematic diagram of a holding device according to another embodiment perspective view;
- Fig. 3:: a schematic diagram of top view of a holding device according to an embodiment; and
- Fig. 4:: a schematic diagram of a side view of a holding device according to an embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

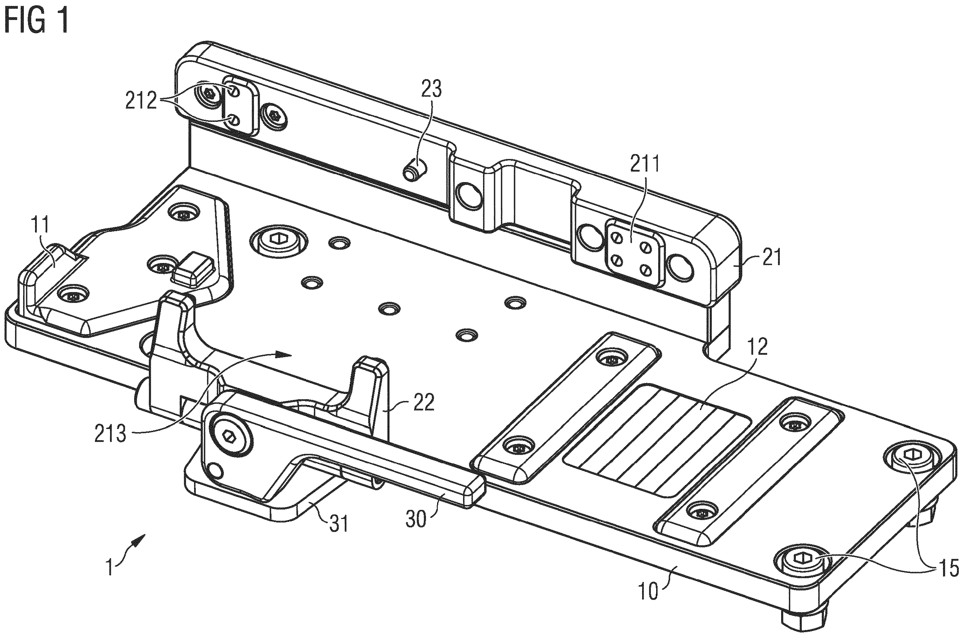

Figure 1 shows a schematic illustration of a holding device 1 according to an embodiment. Holding device 1 comprises a baseplate 10. Baseplate 10 may comprise, for example, elements for mounting the holding device 1 on an appropriate basis. For example, baseplate 10 may comprise one or more holes 15 for screwing the base plate on an appropriate basis in a vehicle or the like. However, it is understood that any other appropriate manner for mounting the holding device 1 may be also possible.

Holding device 1 further comprises a clamping fixture with a first jaw 21 and a second jaw 22. The first jaw 21 is a jaw which is firmly attached to baseplate 10. For example, the first jaw 21 may be mounted on the baseplate 10 by screwing, welding or the like. For example, the first jaw 21 may be mounted on baseplate 10 in such a manner that an edge of the first jaw 21 is parallel to a borderline of the baseplate 10.

The second jaw 22 of the clamping fixture is attached to the baseplate 10 in such a manner that the second jaw 22 can be moved in a direction towards or from the first jaw 21. In particular, the second jaw 22 may be moved in a direction which is parallel to a surface of the baseplate 10. An edge of the second jaw 22 may be parallel to a corresponding edge of the first jaw 21. Especially, second jaw 22 may have an element with a plane which is parallel to a plane of an element of the first jaw 21. In this way, a mobile device such as a mobile radio can be clamped between the first jaw 21 and the second jaw 22.

In order to clamp the mobile radio between the first jaw 21 and the second jaw 22, the second jaw 22 is moved towards the mobile radio by means of a mechanism with a lever 30. For this purpose, lever 30 may be coupled with the second jaw 22 by means of an appropriate arrangement. This mechanism may comprise, for example, elements such as a clutch, a gear or an appropriate joint. However, it is understood, that any other appropriate element for transmitting the movement of lever 30 to an appropriate movement of the second jaw 22 may be also applicable. In particular, a spring or the like may be used, and this spring may be tightened by moving lever 30. Accordingly, the tightened spring may apply an appropriate force of second jaw 22 towards the mobile radio. Accordingly, mobile radio is clamped between the first jaw 21 and the second jaw 22.

Lever 30 may have an appropriate size and an appropriate position such that lever 30 can be operated in a very easy manner. Especially, lever 30 may be operated in such a manner that the user can insert mobile radio between the first jaw 21 and the second jaw 22 and at the same time the user may move lever 30 with the same hand carrying the mobile radio 10.

By clamping the mobile radio between the first jaw 21 and the second jaw 22 of the clamping fixture, the mobile radio is held in a reliable and secure manner. For this purpose, moveable second jaw 22 may apply an appropriate force towards the mobile radio. For example, this force may be in a range between 100 N and 500 N, especially about 250 N. However, it is understood, depending on the requirements and the robustness of the mobile radio, any other appropriate force may be applied.

Especially, it may be possible to limit a maximum force which is applied to the mobile radio, in particular to the sidewalls of the mobile radio. For example, a spring or another appropriate element may be used in order to control the force which is applied by the second jaw 22 towards the mobile radio. For example, the maximum force which is applied by the second jaw 22 to the mobile radio may be limited to 100 N, 250 N or 500 N. However, any other appropriate value for limiting the maximum force to the mobile radio may be possible, too. For example, the movement of the second jaw 22 in the direction of the mobile radio may be limited by the baseplate 10 or another element, for example a limiting element or the like. Accordingly, it can be ensured that the force which applied by the second jaw 22 to the mobile radio is limited or the mobile radio is held without applying a direct force by the first jaw 21 and the second jaw 22 towards the mobile radio.

Since mobile radio is only held by the two jaws 21 and 22 of the clamping fixture, all operating elements in the front of the mobile radio can be further reached. In addition, all elements at the top of the mobile radio and the bottom of radio are also full available. As will be described in more detail below, it is even possible to get access to the battery of the mobile radio. Accordingly, a battery may be removed and replaced by another battery, for example a charged battery.

The baseplate 10 of holding device 1 may further comprise a guide element 11. This guide element 11 may be, for example, an element which is arranged at a specific position of baseplate 10 such that this guide element 11 may guide the movement of a mobile radio into a specific direction when the mobile radio is inserted into the holding device 1. For example, guide element 11 may be a stop element which prevents further movement of the mobile radio in a specific direction. For example, guide element 11 may be a part of the baseplate 10 or an element which is firmly mounted on the baseplate 10, for example by screwing, welding or the like.

Baseplate 10 may further comprise ventilation structures 12 which may provide an air circulation between the baseplate 10 and the mobile radio. For example, ventilation structure 12 may comprise elements for providing a specific distance between the baseplate 10 and the backside of mobile radio. In this way, an airflow in this space may dissipate heat from the mobile radio, in particular from the backside of mobile radio. However, it may be also possible that baseplate 10 may comprise one or more grooves or the like in which an airflow may cool the backside of mobile radio. Furthermore, a cooling may be also achieved by one or more appropriate holes in the baseplate 10 which also may allow an airflow cooling the backside of mobile radio.

Additionally or alternatively, a heatsink or the like may be used for cooling the mobile device which is inserted in the holding device 1.

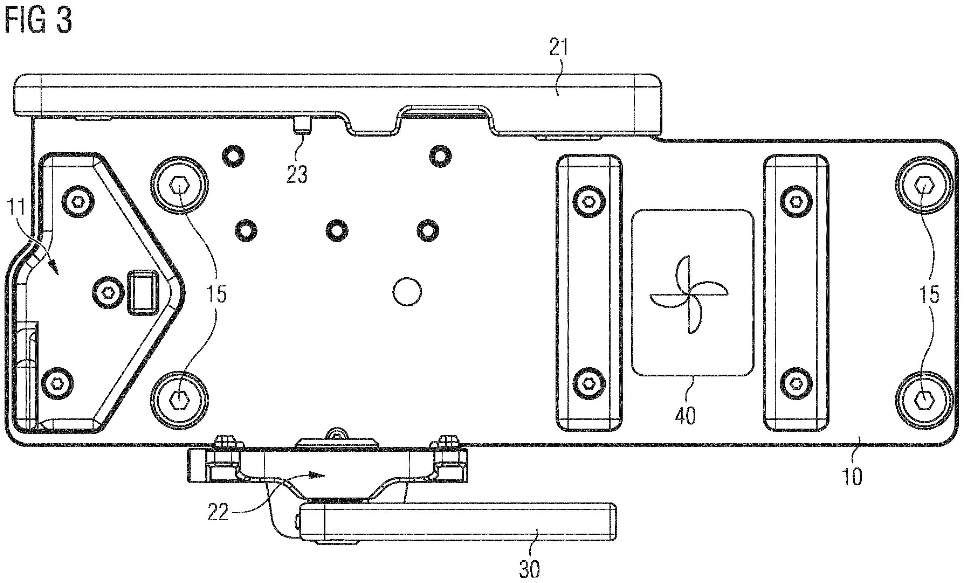

Additionally or alternatively, an active cooling of the mobile radio may be performed by means of an active cooling device 40 (see Fig. 3). For example, active cooling device 40 may comprise one or more fans or the like for establishing an active airflow. However, it is understood, that any other appropriate cooling device may be also possible.

In order to further improve the reliability of holding the mobile radio by the first jaw 21 and the second jaw 22 of the clamping fixture, first jaw 21 and/or second jaw 22 comprises one or more holding elements 23. For example, a holding element 23 may be a pin or the like which protrudes out of the first jaw 21 or the second jaw 22 in the direction of the mobile radio. Size and shape of the holding elements 23 may fit to a corresponding recess in the side of mobile radio.

In this way, the reliability of holding mobile radio between the first and the second jaw 21, 22 may be further improved. Especially, by means of the one or more holding element 23 it is even possible to hold the mobile radio between the first jaw 21 and the second jaw 22 without applying a direct force by the first jaw 21 and/or the second jaw 22 towards the mobile radio.

Additionally or alternatively, first and second jaw 21, 22 may comprise a non-slipping material to improve the grip between the mobile device and the first and second jaw 21, 22.

As already mentioned above, the movement of the moveable second jaw 22 is controlled by lever 30. For example, lever 30 may be moved in a direction parallel to an edge of the second jaw 22 or an edge of baseplate 10. However, any other direction of movement may be possible, too. In order to keep the holding device 1 in a locked position for firmly holding a mobile radio, a locking means 31 may be provided for lever 30 and/or moveable second jaw 22. For example, locking means 31 may automatically lock lever 30 or the movement of the moveable jaw 22, when lever 30 is in a predetermined position, for example an end position. For this purpose, any appropriate mechanism may be used. In particular, locking means 31 may automatically lock the movement of lever 30 and the moveable second jaw 22, when lever 30 reaches a predetermined position. Alternatively, locking means 31 may be manually operated, for example by a user, in order to lock the movement of moveable second jaw 22 or the lever 30. In order to release the mobile radio, locking means 31 may be operated accordingly. For example, a release button may be pressed, or any other appropriate operation may be performed in order to release the locking mechanism. After releasing lever 30 and moveable second jaw 22, moveable jaw 22 may be moved in a direction away from the inserted mobile radio. For example, the movement may be performed by means of a spring or the like.

The first jaw 21 comprises a connection element 211 for electrically coupling one or more connectors of the mobile radio 100 with further devices. For example, connection element 211 may electrically couple a communication interface of the mobile radio with one or more further communication devices. In a possible example, connection element 211 may establish a wired data communication between the mobile radio and a further device such as a computing device. For this purpose, it may be possible that connecting element 211 may be a connector for a wired network connection, a bus link or any other appropriate data connection. Furthermore, connecting element 211 may also provide a connection for a voice communication. For example, connecting element 211 may establish a voice communication between mobile radio and an intercom system or the like. However, it is understood, that connecting element 211 may be also used for establishing any other kind of wired connection, in particular analog or digital communication between the mobile radio 100 and a further device.

Furthermore, it may be possible to establish a connection to a power supply via an appropriate power connector 212. This power connector 212 may be also integrated in the first jaw 21. Accordingly, electrically conductive elements of power connector 212 may establish a connection with corresponding connecting elements of mobile radio. In this way, the mobile radio may be provided with electrical power from an external power supply, for example a power supply network of a vehicle, an external battery, a generator or any other appropriate power source.

It may be also possible to provide the mobile radio with power from a power supply which is integrated or attached to holding device 1. For example, this power supply may comprise a power converter for converting an external provided power to a power supply which can be used for supplying mobile radio. For this purpose, a voltage converter, a rectifier, an inverter or any other appropriate element may be comprised in the power supply 50 of the holding device 1. In particular, a transformer or the like may be used in order to achieve a galvanic insulation between the mobile radio and an external power supply.

By providing power from an internal power supply or an external power supply, it is possible to operate the mobile radio even if the internal battery of the mobile radio 100 is weak or empty. Furthermore, it may be possible to operate mobile radio even if the internal battery of the mobile radio 100 is removed.

The power from the internal power supply or an external power may be also used to charge the internal battery of the mobile radio.

The second jaw 22 and possibly the first jaw 21 comprises one or more openings 213. In particular, the openings 213 may be arranged at a position which relates to an operating element at a side of the mobile radio. In this way, the respective operating element at the side of mobile radio 100 can be even operated when the mobile radio is inserted into the holding device 1.

Additionally or alternatively, it may be possible that the first jaw 21 and/or the second jaw 22 cover the side of the mobile radio 100 only partially. Accordingly, operating elements above or below the area which is covered by the first jaw 21 and the second jaw 22 may be also accessible for operating buttons, knobs or the like.

The accessible area at the side of the mobile radio 100 which can be accessed due to the partial coverage of the first and the second jaw 21, 22 or the openings 213 of the jaws 21, 22 may also provide access to connectors at the side of the mobile radio 100. Accordingly, a terminal at the side of the mobile radio 100 which is not covered by the jaws 21, 22 may be also used for connecting the respective terminal with an external device, for example an external communication device, a power supply or the like.

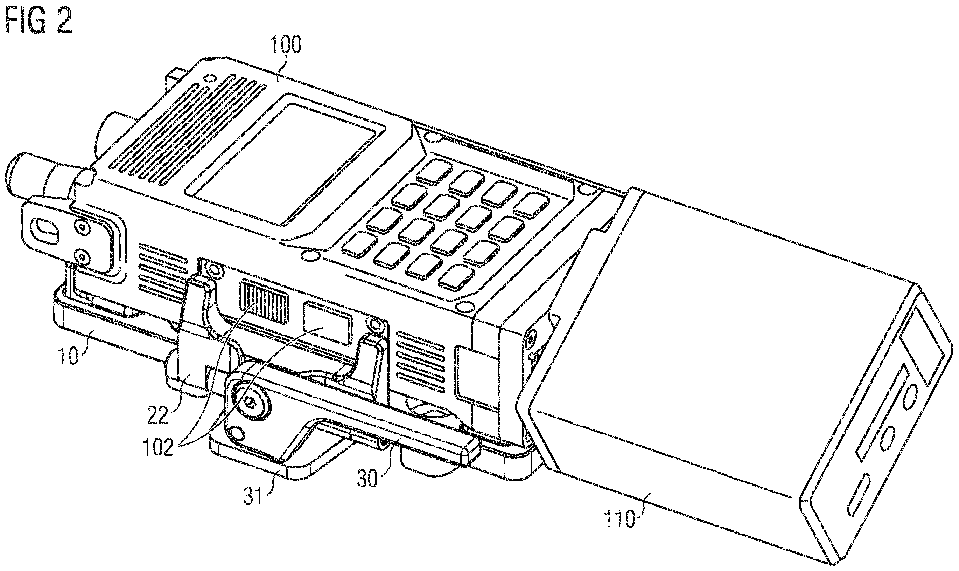

Figure 2 shows a schematic diagram of another holding device 1 for holding a mobile radio 100 according to an embodiment. As can be seen in this figure, the first jaw 21 and the second jaw 22 of the clamping fixture cover only a part of the sides of the mobile radio 100. Elements 101 at the side of the mobile radio 100 which are not covered by the respective jaws 21, 22 are still accessible. Furthermore, additional elements 102 such as knobs, buttons, connectors or terminals may be also accessible through an opening 213 in the jaw 21, 22. Furthermore, baseplate 10 may also not extend over the whole size of the mobile radio 100. For example, baseplate 10 may only extend in the dimensions of the first jaw 21 and the second jaw 22. Accordingly, an airflow in the areas not covered by the baseplate 10 may be also used for cooling the mobile radio 100.

Since holding device 1, in particular the first jaw 21 and the second jaw 22 only cover parts of the mobile radio 100, a connector for connecting a communication interface or a power supply may be accessible. Furthermore, a knob in an opening 213 may be also accessible, when the mobile radio 100 is held by the holding device 1.

As further illustrated in figure 2, a battery 110 of the mobile radio 100 may be also accessible. In particular, this battery 110 may be not clamped by the first jaw 21 and the second jaw 22 of the clamping fixture. Furthermore, baseplate 10 may not extend over an area of the mobile radio 100 which relates to the battery 110. Thus, battery 110 can be removed from mobile radio 100 even if the mobile radio 100 is clamped between the first jaw 21 and the second jaw 22.

Since the mobile radio 100 may be provided with external power, for example via the power connector 212, the mobile radio 100 may be operated even if the battery 110 is removed. Accordingly, battery 110 may be removed and replaced by another battery, or battery 110 may be removed, charged by an external charging device and inserted into mobile radio 100 after the battery has been charged.

In this way, holding device 1 provides a secure holding of mobile radio 100 in such a manner that mobile radio 100 can be fully operated. Furthermore, mobile radio 100 can be provided with external power in order to avoid a shutdown for replacing the battery.

Figure 3 shows a schematic diagram of a of a holding device 1 according to an embodiment. The holding device in this embodiment mainly corresponds to the previously described embodiments. Additionally, holding device 1 in this example further comprises a cooling element 40 for actively cooling the mobile device 100, when the mobile device 100 is inserted into the holding device 1.

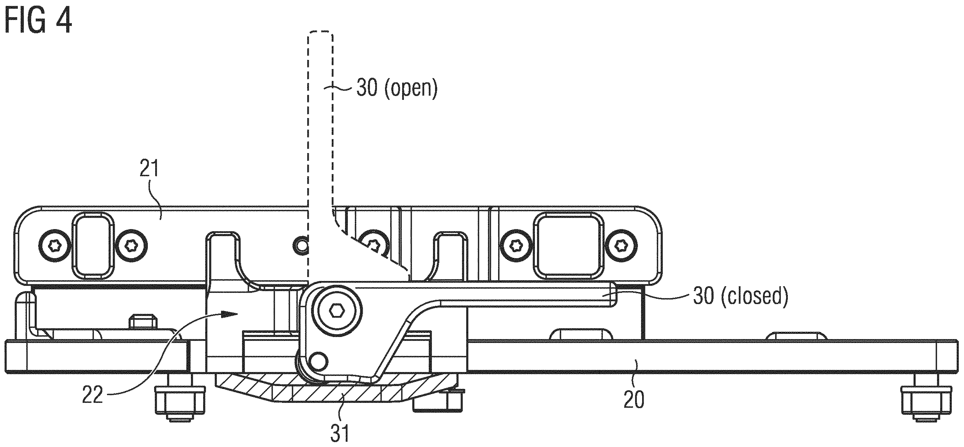

Figure 4 further shows a schematic diagram of a side view of a holding device 1 according to an embodiment. As can be seen in in this illustration, the lever 30 may be locked by locking means 31 in the closed or opened position. For example, locking means 31 may comprise a spring or the like for locating lever 30 in the final positions.

Summarizing, the present invention relates to a secure and versatile holding device for a mobile device such as a mobile radio, in particular a software defined mobile radio. By clamping the mobile radio between two jaws, a secure fixture of the radio can be achieved. Since all or almost all operational elements such as buttons and connectors are still available, the operation of the mobile radio is not limited or restricted, and the mobile radio can be powered or even charged while the mobile radio is held by the holding device.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon re-viewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not in-tended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of references

- 1: holding device

- 10: baseplate
- 11: guiding element
- 12: ventilation structure
- 15: hole

- 21, 22: jaw
- 23: holding element

- 30: level
- 31: locking means

- 40: cooling device

- 100: mobile radio
- 110: battery

- 211: connecting element
- 212: power connector
- 213: opening

## Claims

1. Holding device (1) for a mobile radio (100), comprising:
a baseplate (10);
a clamping fixture comprising a first jaw (21) which is firmly mounted on the baseplate (10) and a second jaw (22) attached to the baseplate (10) and laterally moveable in a direction towards the first jaw (21) such that the mobile radio (100) is clamped by the two jaws (21, 22) between its left side and its right side; and
a lever (30), coupled to the second jaw (22) and configured to move the second jaw (22) towards the first jaw (21);
wherein a connection element (211) is integrated in the first jaw (21) and configured to electrically couple a communication interface of the mobile radio (100) with an external communication device;
wherein the second jaw (22) comprises an opening (213) configured to permit access to an operating element (102) at the respective side of the mobile radio through the opening (213) ;
wherein the first jaw (21) and/or the second jaw (22) comprise at least one holding element (23) that fits into a corresponding opening on a side of the mobile radio (100).

2. Holding device (1) according to claim 1, wherein the baseplate (10) comprises a ventilation structure (12) configured to provide an air circulation between the baseplate (10) and the mobile radio (100) inserted into the holding device (1).

3. Holding device (1) according to claim 1 or 2, comprising an active cooling device (40) configured to dissipate heat from the mobile radio (100) inserted into the holding device (1) .

4. Holding device (1) according to any of claims 1 to 3, comprising a power connector (212) configured to connect the mobile radio (100) to an external power supply.

5. Holding device (1) according to any of claims 1 to 4, comprising a power supply (50) configured provide power to the mobile radio (100) and/or to charge a battery (110) of the mobile radio (100).

6. Holding device (1) according to any of claims 1 to 5, wherein the first jaw (21) and the second jaw (22) are configured to clamp only the sides of the mobile radio (100) without locking a battery (110) of the mobile radio (100).

7. Holding device (1) according to any of claims 1 to 6, wherein the baseplate (100) is configured to allow free access to the battery (110) of the mobile radio (100).

8. Holding device (1) according to any of claims 1 to 7, wherein the second jaw (22) is configured to apply a predetermined force in the direction of the mobile radio (100) .

9. Holding device (1) according to any of claims 1 to 8, wherein the first jaw (21) and/or the second jaw (22) covers the respective side of the mobile radio (100) only partly when the mobile radio (100) is inserted into the holding device (1) .

10. Holding device (1) according to any of claims 1 to 9, comprising a locking means (31) configured to lock the lever (30) and/or the second jaw (22) in a predetermined position.

11. Holding device (1) according to any of claims 1 to 10, comprising a guide element (11) fixed to the baseplate (10) and configured to guide the mobile radio (100) to a predetermined position, when the mobile radio (100) is inserted into the holding device (1).

## Patentansprüche

1. Haltevorrichtung (1) für ein Mobilfunkgerät (100), umfassend:
eine Grundplatte (10);
eine Spannvorrichtung, umfassend eine erste Backe (21), die auf der Grundplatte (10) fest montiert ist, und eine zweite Backe (22), die an der Grundplatte (10) angebracht ist und in eine Richtung zu der ersten Backe (21) lateral bewegbar ist, derart, dass das Mobilfunkgerät (100) durch die zwei Backen (21, 22) zwischen seiner linken Seite und seiner rechten Seite eingespannt ist; und
einen Hebel (30), der mit der zweiten Backe (22) gekoppelt ist und konfiguriert ist, um die zweite Backe (22) zu der ersten Backe (21) zu bewegen;
wobei ein Verbindungselement (211) in die erste Backe (21) integriert und konfiguriert ist, um eine Kommunikationsschnittstelle des Mobilfunkgeräts (100) mit einer externen Kommunikationsvorrichtung elektrisch zu koppeln;
wobei die zweite Backe (22) eine Öffnung (213) umfasst, die konfiguriert ist, um einen Zugang zu einem Bedienelement (102) an der jeweiligen Seite des Mobilfunkgeräts durch die Öffnung (213) zu ermöglichen;
wobei die erste Backe (21) und/oder die zweite Backe (22) mindestens ein Halteelement (23) umfassen, das in eine entsprechende Öffnung auf einer Seite des Mobilfunkgeräts (100) passt.

2. Haltevorrichtung (1) nach Anspruch 1, wobei die Grundplatte (10) eine Belüftungsstruktur (12) umfasst, die konfiguriert ist, um eine Luftzirkulation zwischen der Grundplatte (10) und dem Mobilfunkgerät (100) bereitzustellen, das in die Haltevorrichtung (1) eingesetzt ist.

3. Haltevorrichtung (1) nach Anspruch 1 oder 2, umfassend eine aktive Kühlvorrichtung (40), die konfiguriert ist, um Wärme von dem Mobilfunkgerät (100) abzuführen, das in die Haltevorrichtung (1) eingesetzt ist.

4. Haltevorrichtung (1) nach einem der Ansprüche 1 bis 3, umfassend einen Stromstecker (212), der konfiguriert ist, um das Mobilfunkgerät (100) mit einer externen Stromversorgung zu verbinden.

5. Haltevorrichtung (1) nach einem der Ansprüche 1 bis 4, umfassend eine Stromversorgung (50), die konfiguriert ist, um Strom an das Mobilfunkgerät (100) bereitzustellen und/oder eine Batterie (110) des Mobilfunkgeräts (100) zu laden.

6. Haltevorrichtung (1) nach einem der Ansprüche 1 bis 5, wobei die erste Backe (21) und die zweite Backe (22) konfiguriert sind, um nur die Seiten des Mobilfunkgeräts (100) einzuspannen, ohne eine Batterie (110) des Mobilfunkgeräts (100) zu arretieren.

7. Haltevorrichtung (1) nach einem der Ansprüche 1 bis 6, wobei die Grundplatte (100) konfiguriert ist, um einen freien Zugang zu der Batterie (110) des Mobilfunkgeräts (100) zu erlauben.

8. Haltevorrichtung (1) nach einem der Ansprüche 1 bis 7, wobei die zweite Backe (22) konfiguriert ist, um eine vorbestimmte Kraft in die Richtung des Mobilfunkgeräts (100) aufzubringen.

9. Haltevorrichtung (1) nach einem der Ansprüche 1 bis 8, wobei die erste Backe (21) und/oder die zweite Backe (22) die jeweilige Seite des Mobilfunkgeräts (100) nur teilweise abdeckt, wenn das Mobilfunkgerät (100) in die Haltevorrichtung (1) eingesetzt ist.

10. Haltevorrichtung (1) nach einem der Ansprüche 1 bis 9, umfassend ein Arretierungsmittel (31), das konfiguriert ist, um den Hebel (30) und/oder die zweite Backe (22) in einer vorbestimmten Position zu arretieren.

11. Haltevorrichtung (1) nach einem der Ansprüche 1 bis 10, umfassend ein Führungselement (11), das an der Grundplatte (10) befestigt ist und konfiguriert ist, um das Mobilfunkgerät (100) zu einer vorbestimmten Position zu führen, wenn das Mobilfunkgerät (100) in die Haltevorrichtung (1) eingesetzt wird.

## Revendications

1. Dispositif de maintien (1) pour une radio mobile (100), comprenant :
une plaque de base (10) ;
un dispositif de serrage comprenant une première mâchoire (21) qui est fermement montée sur la plaque de base (10) et une seconde mâchoire (22) fixée à la plaque de base (10) et mobile latéralement dans une direction vers la première mâchoire (21) de telle sorte que la radio mobile (100) est serrée par les deux mâchoires (21, 22) entre son côté gauche et son côté droit ; et
un levier (30), accouplé à la seconde mâchoire (22) et conçu pour déplacer la seconde mâchoire (22) vers la première mâchoire (21) ;
dans lequel un élément de liaison (211) est intégré dans la première mâchoire (21) et conçu pour coupler électriquement une interface de communication de la radio mobile (100) à un dispositif de communication externe ;
dans lequel la seconde mâchoire (22) comprend une ouverture (213) conçue pour permettre l'accès à un élément de commande (102) au niveau du côté respectif de la radio mobile à travers l'ouverture (213) ;
dans lequel la première mâchoire (21) et/ou la seconde mâchoire (22) comprennent au moins un élément de maintien (23) qui s'insère dans une ouverture correspondante sur un côté de la radio mobile (100).

2. Dispositif de maintien (1) selon la revendication 1, dans lequel la plaque de base (10) comprend une structure de ventilation (12) conçue pour assurer une circulation d'air entre la plaque de base (10) et la radio mobile (100) insérée dans le dispositif de maintien (1).

3. Dispositif de maintien (1) selon la revendication 1 ou 2, comprenant un dispositif de refroidissement actif (40) conçu pour dissiper la chaleur de la radio mobile (100) insérée dans le dispositif de maintien (1).

4. Dispositif de maintien (1) selon l'une quelconque des revendications 1 à 3, comprenant un connecteur d'alimentation (212) conçu pour connecter la radio mobile (100) à une alimentation externe.

5. Dispositif de maintien (1) selon l'une quelconque des revendications 1 à 4, comprenant une alimentation électrique (50) conçue pour alimenter la radio mobile (100) et/ou pour charger une batterie (110) de la radio mobile (100).

6. Dispositif de maintien (1) selon l'une quelconque des revendications 1 à 5, dans lequel la première mâchoire (21) et la seconde mâchoire (22) sont conçues pour serrer uniquement les côtés de la radio mobile (100) sans verrouiller une batterie (110) de la radio mobile (100).

7. Dispositif de maintien (1) selon l'une quelconque des revendications 1 à 6, dans lequel la plaque de base (100) est conçue pour permettre un libre accès à la batterie (110) de la radio mobile (100).

8. Dispositif de maintien (1) selon l'une quelconque des revendications 1 à 7, dans lequel la seconde mâchoire (22) est conçue pour appliquer une force prédéterminée en direction de la radio mobile (100).

9. Dispositif de maintien (1) selon l'une quelconque des revendications 1 à 8, dans lequel la première mâchoire (21) et/ou la seconde mâchoire (22) ne recouvrent que partiellement le côté respectif de la radio mobile (100) lorsque la radio mobile (100) est insérée dans le dispositif de maintien (1).

10. Dispositif de maintien (1) selon l'une quelconque des revendications 1 à 9, comprenant un moyen de verrouillage (31) conçu pour verrouiller le levier (30) et/ou la seconde mâchoire (22) dans une position prédéterminée.

11. Dispositif de maintien (1) selon l'une quelconque des revendications 1 à 10, comprenant un élément de guidage (11) fixé à la plaque de base (10) et conçu pour guider la radio mobile (100) vers une position prédéterminée, lorsque la radio mobile (100) est insérée dans le dispositif de maintien (1).
